(19) Europäisches Patentamt
European Patent Office
Office européen des brevets

(11) **EP 1 435 055 B1**

(12) **FASCICULE DE BREVET EUROPEEN**

(45) Date de publication et mention
de la délivrance du brevet:
**20.12.2017 Bulletin 2017/51**

(21) Numéro de dépôt: **02795303.3**

(22) Date de dépôt: **11.10.2002**

(51) Int Cl.:
***G06F 17/30*** *(2006.01)*

(86) Numéro de dépôt international:
**PCT/FR2002/003469**

(87) Numéro de publication internationale:
**WO 2003/032195 (17.04.2003 Gazette 2003/16)**

(54) **PROCEDE ET SYSTEME DE GESTION DE BASES DE DONNEES MULTIMEDIA.**

VERFAHREN UND SYSTEM ZUR VERWALTUNG VON MULTIMEDIA-DATENBANKEN

METHOD AND SYSTEM FOR MANAGING MULTIMEDIA DATABASES

(84) Etats contractants désignés:
**AT BE BG CH CY CZ DE DK EE ES FI FR GB GR IE IT LI LU MC NL PT SE SK TR**

(30) Priorité: **12.10.2001 FR 0113222**

(43) Date de publication de la demande:
**07.07.2004 Bulletin 2004/28**

(73) Titulaire: **Commissariat à l'Énergie Atomique et aux Énergies Alternatives**
**75015 Paris (FR)**

(72) Inventeurs:
• **ESSAFI, Hassane**
**F-91400 Orsay (FR)**
• **GAYRARD, Michel-Pierre**
**F-92270 Bois-colombes (FR)**
• **PIC, Marc**
**F-75013 Paris (FR)**
• **ADAM, Pascal**
**F-94250 Gentilly (FR)**

(74) Mandataire: **Desormiere, Pierre-Louis et al**
**Cabinet Beau de Loménie**
**158, rue de l'Université**
**75340 Paris Cedex 07 (FR)**

(56) Documents cités:
**WO-A-00/52590**

• HU M J ET AL: "Multimedia Description Framework (MDF) for content description of audio/video documents" DIGITAL 99 LIBRARIES. 4TH. ACM CONFERENCE ON DIGITAL LIBRARIES. BERKELEY, CA, AUG. 11 - 14, 1999, ACM CONFERENCE ON DIGITAL LIBRARIES, NEW YORK, NY: ACM, US, 11 août 1999 (1999-08-11), pages 67-75, XP002180863 ISBN: 1-58113-145-3
• FRIESEN O ET AL: "Multimedia information systems: the confluence of multiple technologies" SINGAPORE ICCS/ISITA '92. 'COMMUNICATIONS ON THE MOVE' SINGAPORE 16-20 NOV. 1992, NEW YORK, NY, USA,IEEE, US, 16 novembre 1992 (1992-11-16), pages 969-973, XP010067215 ISBN: 0-7803-0803-4
• WOOD L: "Programming the Web: the W3C DOM specification" IEEE INTERNET COMPUTING, IEEE SERVICE CENTER, PISCATAWAY, NJ, US, vol. 3, no. 1, janvier 1999 (1999-01), pages 48-54, XP002163911 ISSN: 1089-7801

**Description**

La présente invention concerne un procédé et un système de gestion de bases de données multimédia.

Avec la révolution du numérique, la démocratisation des systèmes de production, de stockage et de transport de données multimédia (textes, photos, vidéo, objets animés ou fixes, son, ...) et la fusion de technologies issues des télécommunications, de l'audiovisuel et de l'informatique, on assiste à une explosion sans précédent du volume de données émises ou disponibles sur le réseau international Internet. Ce volume est estimé à une dizaine de milliards de teraoctets et il double tous les ans. Il devient primordial de proposer des solutions facilitant la diffusion, la localisation et l'accès à l'information pertinente disponible sur la toile (World Wide Web). En plus du volume important de données à manipuler, la difficulté majeure est le développement d'une solution permettant d'exploiter l'hétérogénéité du contenu d'un document multimédia. En effet, un document multimédia est souvent constitué d'un ensemble de composants dont chacun est de nature différente (texte, figure, image, photo, vidéo, son, signal...).

Diverses solutions ont déjà été proposées pour l'indexation et la recherche de documents à archiver, mais ces solutions sont la plupart du temps dédiées à un type particulier de document.

Ainsi, par exemple, les brevets US 5 706 365 et US 5 794 177 proposent des méthodes d'indexation de textes basées respectivement sur l'approche n-grams et l'identification du paradigme du mot candidat.

La demande internationale WO 99/59083 concerne également un système de gestion de documents où le texte représente l'élément dominant des documents.

L'article de A. Karmouch intitulé « Multimedia distributed coopérative system » paru dans la revue Computer Communications, Elsevier Science Publishers BV, Amsterdam, Vol 16, N°9 de janvier 1993 décrit un système de gestion d'une base de données multimédia distribué qui comprend des unités opérationnelles et fonctionnelles pour l'acquisition, la structuration, l'indexation et la recherche de documents multimédia

La présente invention vise à permettre d'appréhender de façon automatique dans son ensemble un document multimédia aussi bien pour les étapes d'acquisition, de structuration, d'indexation et de stockage que pour l'étape de localisation par le contenu d'un document multimédia, au sein d'un système parallèle et réparti de gestion de bases de données multimédia distribuées.

L'invention vise ainsi à assister efficacement l'opérateur dans sa tâche d'accès et de création de contenus multimédia,

Le procédé et le système de gestion d'une base de données multimédia selon l'invention sont définis dans les revendications annexées.

Ces buts sont atteints grâce à un système et un procédé de gestion d'une base de données multimédia selon les revendications indépendantes.

D'autres caractéristiques particulières sont exposées dans les revendications dépendantes. Les différents modules du système selon l'invention exploitent la complémentarité d'informations apportées par chaque constituant d'un document multimédia et permettent d'enrichir, lors de la phase d'archivage et d'indexation, la description du contenu du document, cette description enrichie constituée par la signature composite du document permettant lors de la phase de recherche d'identifier le document le plus pertinent. Lors de la phase de recherche, une interface utilisateur interagit avec le système en utilisant des requêtes composites constituées d'une ou plusieurs requêtes atomiques, ou requêtes élémentaires (picturales, textuelles ou acoustiques, par exemple).

D'autres caractéristiques et avantages de l'invention ressortiront de la description suivante de modes particuliers de réalisation, donnés à titre d'exemples, en référence aux dessins annexés, sur lesquels :

- la figure 1 est un schéma-bloc montrant l'architecture générale du système de gestion d'une base de données multimédia selon l'invention,
- la figure 2 est un organigramme montrant les différents étapes d'un procédé d'indexation d'un document multimédia selon l'invention,
- la figure 3 est un organigramme montrant les différentes étapes d'un procédé de recherche d'un document multimédia selon l'invention,
- la figure 4 est un diagramme montrant la synthèse des réponses et la coopération entre différents modules de traitement du système de gestion selon l'invention, dans un exemple de recherche de document multimédia,
- la figure 5 est un schéma-bloc montrant les différentes étapes du procédé selon l'invention lors de l'acquisition et du traitement d'une requête composite appliquée à des documents constituant du texte et de l'image,
- la figure 6 est un schéma-bloc montrant les différentes fonctions exercées dans le système de gestion selon l'invention lors de l'acquisition et du traitement d'une requête composite appliquée à des documents contenant du texte et de l'image,
- la figure 7 est un organigramme montrant les différentes étapes mises en oeuvre par un agent spécialisé dans l'indexation (ou archivage) et la recherche de documents multimédia,
- la figure 8 montre un histogramme $H(i)$ de la bande luminance d'un exemple de document multimédia multifonds et également un histogramme cumulé $\Sigma_{o,T}\,H(i)$ sur un segment de taille T,

- la figure 9 montre une partie du fond d'une image avec des caractères non étiquetés,
- la figure 10 montre la mise en évidence de la zone texte dans la partie du fond de l'image de la figure 9 après un traitement de bouchage de trous et de liaison des caractères entre eux,
- la figure 11 représente un exemple d'histogramme du bloc de texte de la figure 9,
- la figure 12 représente un exemple d'histogramme d'un bloc image,
- la figure 13 représente un schéma bloc illustrant le processus de fabrication de la signature composite d'un document multimédia.

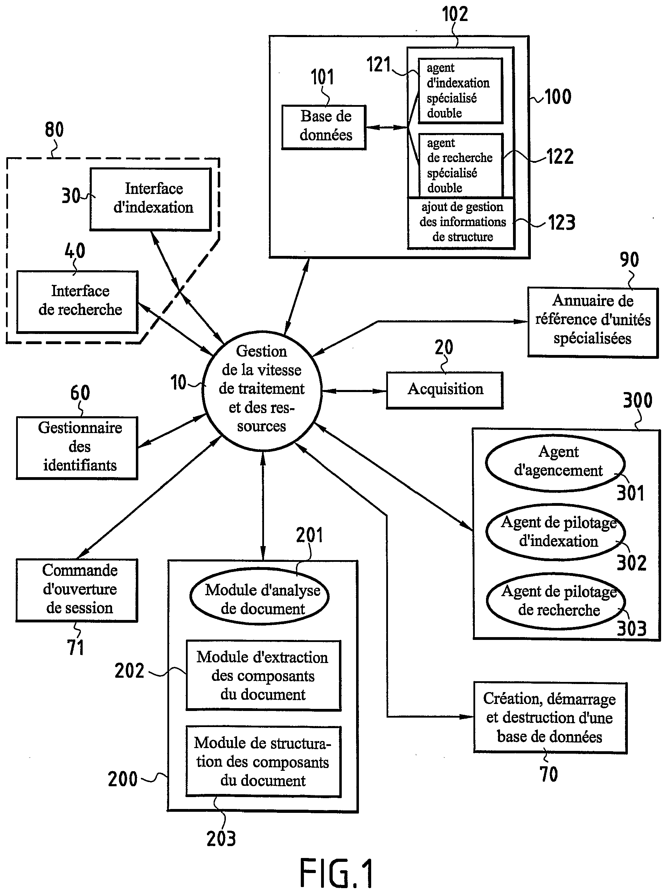

On décrira d'abord en référence à la figure 1, l'architecture générale d'un système de gestion de bases de données multimédia selon l'invention.

Le système de gestion selon l'invention comprend une plate-forme 10 d'interconnexion et d'intercommunication d'unités spécialisées opérationnelles et d'unités spécialisées fonctionnelles. Cette plate-forme 10 sous la forme d'un bus logiciel et d'outils de gestion des ressources assure la gestion et l'optimisation des liaisons entre des modules hétérogènes et constitue ainsi une unité de gestion des ressources et de la vitesse de traitement.

La plate-forme 10 permet d'interconnecter, de fédérer et de faire collaborer les agents nécessaires à des activités d'indexation et de recherche d'un document multimédia qui peut contenir à la fois des textes, des images, des signaux vidéo, des signaux audio.

La plate-forme 10 intervient à deux niveaux: d'une part dans l'intégration et la coordination des agents répartis et d'autre part dans la gestion et l'optimisation des ressources du système.

L'intégration et la coordination des agents répartis impliquent de tenir compte des points suivants :

- la localisation des objets de chacun des agents qui peuvent être répartis sur plusieurs machines connectées via un réseau Internet ou Intranet par exemple.
- l'hétérogénéité des agents qui peuvent être soit conçus pour fonctionner indépendamment, soit développés dans des environnements et/ou langages de programmation différents (java, C, C++, Fortran, Unix, NT, Windows....),
- la communication et le transfert de données entre les agents de la plate-forme. Pour ce faire, plusieurs protocoles de communication peuvent être utilisé en fonction des applications et peuvent se fonder notamment :
- sur le protocole UDP/IP ou RTP/RTSP pour le transfert des images ou des signaux vidéo en mode non connecté et donc en temps réel,
- sur le protocole TCP/IP pour le transfert de données où la fiabilité de transfert prime sur le temps de transfert,
- sur les protocoles CORBA et JAVA utilisés par défaut pour transférer tout type d'objet,
- le parallélisme et la multiprogrammation qui permettent de réduire le temps de calcul en offrant les outils permettant l'exécution en parallèle de plusieurs agents ou de sous-agents d'un même agent.

La gestion et l'optimisation des ressources (machines, support de communication, agent de traitement..) impliquent trois fonctions qui correspondent chacune à un type d'opérateur.

Du point de vue de l'administration, la plate-forme 10 permet de définir les ressources nécessaires à l'application.

Du point de vue du concepteur d'application, la plate-forme 10 permet de référencer un objet ou un agent sans souci de sa localité, de choisir le protocole de communication adéquat et de fournir les outils de parallélisation et de répartition de tâches et d'équilibrage de charge.

Du point de vue de l'utilisation d'indexation et de recherche, la plate-forme 10 assure les échanges effectués entre le client et le serveur.

Plusieurs unités spécialisées opérationnelles centrales coopèrent avec la plate-forme 10.

Un module 70 constitue un gestionnaire de base de média et est utilisé par l'administrateur pour assurer la création, le démarrage et la destruction d'une base de données multimédia (ou "base de média").

Le gestionnaire 70 de base de média est présent sur chacun des noeuds de calcul participant à la configuration. A son démarrage, le gestionnaire 70 de base de média analyse la configuration locale (possibilité ou non d'activer localement des services particuliers tels que l'indexation de texte, indexation d'image, reconnaissance optique de caractères, serveur de base de données, ...) et démarre les agents spécialisés qui doivent être logés localement. Le gestionnaire 70 de base de média s'enregistre ensuite dans le service de nommage (annuaire 90 de référence des unités spécialisées) de telle façon que les clients puissent le retrouver et s'y connecter.

La création d'une base de média s'effectue via un module 71 de commande d'ouverture de session et de pilotage qui se connecte et ouvre une session sur un gestionnaire 70 de base de média. Le module 71 fournit un fichier qui constitue la configuration des ressources de la base de média. Chaque gestionnaire 70 de base de média impliqué dans la configuration est responsable de l'exécution de la partie des requêtes de la machine sur laquelle il est placé.

Lors du démarrage d'une base de média dédiée à une application particulière, tous les agents et sous-agents de la base de média qui doivent être logés dans la même machine que le gestionnaire 70 de base de média sont activés.

L'activation d'un agent consiste à créer une copie de l'agent en mémoire, connecter l'agent sur le bus de la plate-forme, enregistrer l'agent au service de nommage.

Une interface utilisateur 80, qui constitue une unité spécialisée opérationnelle centrale, est raccordée à la plate-forme 10 et comprend une interface 30 d'indexation de documents et une interface 40 de recherche de documents.

L'interface utilisateur 80 permet ainsi à l'utilisateur d'une part d'archiver et d'indexer les documents et d'autre part d'exprimer ses requêtes et de récupérer les documents réponses.

Un gestionnaire d'identifiants 60 connecté à la plate-forme 10 constitue une unité spécialisée fonctionnelle qui est chargée de fournir une référence ou un paquet de références libres non exploitées, pour identifier par une référence unique chaque document de la base de données ou des composants issus d'un même document de la base de données.

Afin de s'assurer que chaque entité (document, question ou composant) présente dans le système a un identifiant unique, à chaque invocation, le gestionnaire d'identifiants 60 fournit une référence non encore servie.

Le gestionnaire d'identifiants 60 procède également à la libération de références d'identification après disparition d'un document ou d'une question ayant reçu une réponse.

Un aspect important du système de gestion de bases de données selon l'invention est constitué par l'organisation des bases de données multimédia ou bases de média qui comprennent un ensemble d'unités spécialisées opérationnelles et fonctionnelles dédiées à une application particulière (par exemple gestion de documents vidéo, gestion de documents papier).

Les unités opérationnelles d'une base de média comprennent essentiellement :

- un module d'acquisition 20,
- un processeur de média 200,
- un module mémoire 100.

Une base de média regroupe en outre des unités fonctionnelles au sein d'un serveur de document 300.

Le module d'acquisition 20 pilote les différents systèmes d'acquisition (scanner, caméra, serveur accessible via Internet...) et convertit les formats des documents en entrée en format interne.

Le module d'acquisition 20 est ainsi l'agent chargé de l'ouverture et de la lecture du contenu du document à archiver. Il est constitué de différentes méthodes, chacune étant adaptée à la lecture d'un type particulier de document. Les documents d'entrée peuvent ainsi être par exemple de type TIFF, GIF, JPEG, AVI ou MPEG.

L'invocation d'une méthode adaptée à un type particulier de document provoque la lecture du document et en retour fournit comme résultat un objet (au sens informatique), regroupant les données et les méthodes d'accès à ces données. A titre d'exemple, une méthode mise en oeuvre au sein du module d'acquisition 20 peut fournir en retour la valeur de pixels de position donnée lorsqu'elle est appliquée à un objet de type image ou la trame d'une position donnée lorsqu'elle est appliquée à un objet de type vidéo.

Le processeur de média 200 comprend un module 201 d'analyse de document, un module 202 d'extraction des composants du document et un module 203 de structuration des composants du document.

Le processeur de média 200 est le premier agent appelé lors de la phase d'archivage des documents. Il analyse le contenu du document à indexer afin de produire une description structurelle du document décrivant ses constituants ainsi que les relations qui les relient. Le module 201 d'analyse de document et le module 202 d'extraction des composants du document comprennent un certain nombre d'outils de traitement et d'analyse d'images ou de signal (ondelette, filtrage, détection de contour, analyse d'homogénéité, texture, appariement, ...), d'analyse statistique, de modélisation/apprentissage et de classification. Son rôle est de regrouper les éléments (pixels d'une image, trame d'un signal vidéo, échantillon d'un signal d'un document) en composants homogènes (les plans d'un signal vidéo, les zones textes à l'intérieur d'une trame ou d'une image, les zones graphiques, les objets sonores,...) qui sont classés pour être ensuite envoyés aux bons agents d'indexation. La première étape du processus consiste à associer à chaque élément du document un attribut (vecteur de valeurs) qui sert à déterminer si deux éléments voisins sont similaires ou non et donc s'ils peuvent être regroupés ou non. La deuxième étape consiste à déterminer le type des classes homogènes.

Plusieurs méthodes sont utilisées pour calculer la matrice d'attributs du document formée à partir des vecteurs de valeur associés à chaque élément du document. Une des méthodes employées est basée sur une décomposition multi-échelle obtenue par l'application d'une Transformée en Ondelette (application de deux filtres linéaires dont l'un est passe-bas et l'autre est passe-haut). Les composants homogènes sont déterminés en regroupant sous la même étiquette les points voisins ayant des attributs similaires. Le résultat de la fusion est un document labellisé utilisé pour délimiter le zones homogènes (du document d'origine) correspondant aux points connexes ayant le même label. La dernière étape est consacrée à l'identification du type de chacune des zones. Pour cela des techniques d'analyse statistique sont appliquées à chacune des zones. Chaque composant est envoyé à l'agent d'indexation adéquat. Le contenu des composants peut être détruit et seule la signature est sauvegardée. Le document d'origine est envoyé à la base de données 101 pour l'archivage.

Dans le cas où le document à archiver contient du texte, au cours de la phase d'analyse et d'extraction des composants, on peut faire appel à un agent OCR de reconnaissance optique de caractères qui permet de coder le contenu des composants textuels.

Le module 203 de structuration des composants du document produit la structure du document. Il exploite l'espace topologique des composants et leur contenu sémantique pour déterminer la relation entre les différents composants du document et construire la représentation structurelle du document. Il peut aussi s'appuyer sur la DTD (Document Type Description) modélisant les documents de l'application. Ceci n'est possible que si le domaine de l'application est bien défini et que les documents sont modélisés par une ou plusieurs DTD.

La structure (graphe d'objets) ainsi produite est stockée dans la base de données 101, elle sert de lien entre les différents constituants du document multimédia. Chaque élément (objet) du graphe contient les informations permettant de retrouver le document d'origine et de localiser la zone de données correspondant au composant.

Le module mémoire 100 permet de décrire (indexer) le contenu des différents composants constituant le document et archiver cette description ainsi que les documents d'origine.

La description caractérisant le contenu d'un document multimédia (c'est-à-dire d'un objet structuré de présentation de données qui intègre des composants de type hétérogène tels que image, son, vidéo, texte) constitue une signature composite ou index de ce document multimédia.

Cette description fait intervenir des caractérisations des contenus de chacun des composants et aussi des caractérisations des relations entre ces composants.

Le module mémoire 100 comprend un certain nombre d'agents qui travaillent en synergie pour produire la signature composite caractérisant le contenu du document à indexer. Ces mêmes agents collaborent lors de la phase de recherche pour extraire et comparer la signature de la question ou requête composite de l'opérateur aux signatures composites des documents archivés.

Les agents et outils du module mémoire 100 qui peuvent être logés dans la même machine ou dans des machines différentes reliées par un réseau Intranet/Internet, permettent ainsi d'une part d'extraire une signature composite caractérisant finement le contenu et l'ossature d'un document, et de stocker celle-ci, et d'autre part de localiser des documents contenant une information particulière exprimée dans la question de l'opérateur.

Le module mémoire 100 comprend essentiellement une base de données multimédia 101 et un ensemble 102 d'agents spécialisés opérationnels.

L'ensemble 102 comprend au moins un agent 121 d'indexation des composants et d'archivage, un agent 122 de recherche des composants et un agent 123 de gestion des informations relatives à la structure des documents.

Chaque agent 121, 122 est dédié à la gestion d'un type particulier de documents.

En tant qu'agent d'indexation et d'archivage 121 et agent de recherche 122 on peut ainsi avoir un agent IMAS dédié à la gestion des informations picturales.

Chaque agent IMAS est lui-même décomposable en au moins deux sous-agents PIMAS1, PIMAS2 utilisant chacun un mode de traitement spécifique pour la gestion des informations picturales et affectant chacun des index aux composants élémentaires de l'image, résultant des traitements spécifiques subis par l'image dans ces sous-agents PIMAS1 et PIMAS2. La signature composite du document image sera ensuite réalisée à partir d'une fusion des index des composants élémentaires produits par les sous-agents PIMAS1 et PIMAS2.

Ainsi, l'indexation d'une liste de composants picturaux comprend essentiellement une étape de calcul des index locaux de chacun des composants, chacun des composants étant traité indépendamment des autres composants de la liste et du contenu de la base, et une étape de production des signatures normalisées en projetant par exemple les index sur l'espace réduit des vecteurs représentant les signatures, en utilisant par exemple un algorithme basé sur l'analyse en composantes principales (ACP). Une image peut par exemple être caractérisée par une couleur globale et une couleur locale.

En tant qu'agent d'indexation et d'archivage 121 et agent de recherche 122, on peut non seulement avoir un ou plusieurs agents IMAS dédiés à la gestion des informations picturales, mais également un ou plusieurs agents AMAS dédiés à la gestion des données audio, un ou plusieurs agents VIMAS dédiés aux traitements des données vidéo et un ou plusieurs agents TEMAS dédiés à la gestion des informations textuelles.

Des agents spécialisés opérationnels de stockage d'image et de stockage de texte sont prévus pour stocker dans la base de données 101 respectivement des données pixelliques et des données purement textuelles.

**[0058]** - L'agent TEMAS spécialisé dans l'indexation et la recherche de documents textuels permet l'interrogation d'une base de données documentaire en langage naturel. Pour traiter une requête l'agent TEMAS calcule le degré de proximité sémantique de la question avec tous les documents de la base puis ordonne ces documents selon leur degré de proximité sémantique.

Lors d'un processus d'indexation d'un texte, le texte à introduire dans la base de données est soumis à un traitement linguistique puis un traitement statistique.

Au niveau du traitement linguistique, l'objectif est d'extraire et d'exprimer le concept contenu dans un texte donné. Le noyau de l'agent TEMAS est constitué d'un certain nombre de fonctions linguistiques. Ce noyau s'appuie sur un dictionnaire de concepts, disponibles par exemple en trois langues (français, anglais, allemand, ...), généraux ou privés (c'est-à-dire associés à un thème ou un domaine particulier), et des règles de formulations des questions. Le principe de fonctionnement de ce noyau se base sur l'analyse linguistique aussi bien lors de l'indexation que lors de la recherche de l'information. Cette analyse permet de reconnaître toutes les formes d'un mot (conjugaison, singulier / pluriel, sigle, ...), de supprimer les ambiguïtés (par exemple distinguer le nom "or" de la conjonction de coordination <or>). L'analyse linguistique offre d'autres possibilités telles que la reconnaissance des dépendances linguistiques comme "travailleur immigré".

L'analyse statistique a pour but de pondérer les unités lexicales pour apporter un pouvoir discriminant plus fort aux concepts les plus rares dans la base.

Une phase de reformulation permet d'étendre la question aux expressions équivalentes (or noir et pétrole) et/ou de préciser des termes flous.

L'agent TEMAS est conçu d'une manière permettant d'intrégrer un ou plusieurs noyaux. SPIRIT (Système Syntaxique et Probabiliste d'Indexation et de Recherche d'Informations Textuelles) de la société TGID est un exemple de noyau qui peut être intégré dans l'agent TEMAS.

Le module mémoire 100 comprend également un niveau comprenant un certain nombre d'agents spécialisés fonctionnels ou outils qui permettent notamment :

- d'agencer les différents agents opérationnels,
- d'unifier et d'homogénéiser, l'accès aux services des différents agents,
- de cacher les spécificités, l'allocation et les détails d'implémentation des agents,
- d'assurer l'interopérabilité entre les différents agents opérationnels,
- d'offrir une unique représentation de haut niveau des documents multimédia.

Une base de média comprend différentes unités fonctionnelles regroupées au sein d'un serveur de document 300 qui pilote le processus d'archivage et de localisation des documents et se charge ainsi de l'agencement des différents agents du système, de l'élaboration de stratégies d'archivage, d'indexation et de recherche de documents, de l'authentification et de la pertinence des informations.

Le serveur de documents 300 comprend un agent 301 d'agencement des différentes unités du système, un agent 302 de pilotage d'indexation de documents et un agent 303 de pilotage de recherche de documents, ces agents communiquant et collaborant par l'intermédiaire de la plate-forme 10.

L'agent d'agencement 301 a pour but d'optimiser les ressources en matériels, en fonction de contraintes définies par l'utilisateur, pour que les processus d'archivage et de recherche s'effectuent dans les meilleures conditions et les meilleurs délais.

En analysant la configuration choisie par l'administrateur, l'agent d'agencement 301 élabore une stratégie d'exécution permettant de réduire les communications au sein d'un réseau et de paralléliser au maximum le traitement à l'intérieur de chaque agent.

A titre d'exemple, dans un cas où six agents IMAS sont dédiés au traitement des données picturales, on peut avoir quatre agents IMAS (IMAS11, IMAS12, IMAS13, IMAS14) localisés sur une première machine M1 et deux agents IMAS (IMAS21, IMAS22) localisés sur une deuxième machine M2.

Selon un autre exemple, dans le cas de la représentation d'un signal vidéo, avec un premier traitement exécuté à l'aide d'un agent VIMAS dédié aux traitements de données vidéo, puis un second traitement opéré sur une image à l'aide d'un agent IMAS dédié au traitement d'informations picturales, si l'on dispose par exemple d'un ensemble de plusieurs agents IMASij (tels que IMAS11, IMAS12, IMAS13, IMAS14, IMAS21, IMAS22), l'agent d'agencement 301 établit une politique du type producteur/consommateur d'agencement entre l'agent VIMAS et les agents IMASij.

Chaque fois que l'agent VIMAS produit une image représentant une séquence qui vient d'être identifiée, cette image est affectée à l'agent indexeur élémentaire IMASij le moins chargé. La charge d'un agent indexeur élémentaire IMASij est estimée en fonction de la complexité (taille, homogénéité, ...) des objets présents dans sa file d'attente.

On décrira maintenant un processus d'indexation ou d'archivage d'un document multimédia piloté par un agent 302 de pilotage d'indexation de documents.

Le serveur de documents 300 ayant reçu un document à archiver s'adresse en premier lieu à l'annuaire 90 de référence d'unités spécialisées afin de récupérer les références des agents d'indexation et de recherche tels que les agents IMAS, TEMAS, AMAS, VIMAS.

L'indexation d'un ensemble de documents peut s'effectuer en parallèle en fonction des ressources connectées à la plate-forme 10.

Chaque groupe d'indexeur reçoit un paquet de documents à indexer par exemple des documents picturaux, chaque indexeur fabrique un index local qui ne reflète que le contenu des images du paquet.

On opère une fusion et éventuellement une normalisation des résultats de l'indexation locale au niveau de chaque groupe d'indexeurs (par exemple un premier groupe d'indexeurs IMAS11, IMAS12, IMAS13, IMAS14 et un deuxième groupe d'indexeurs IMAS21, IMAS22).

On procède à une fusion globale des index fabriqués pour chaque image.

Du point de vue d'un utilisateur, le processus d'archivage d'un document multimédia est le suivant :

L'opérateur se connecte au système en s'identifiant au processus de contrôle d'accès. Après vérification et succès de ce processus, une fenêtre d'accueil s'affiche et permet à l'opérateur, par l'interface d'indexation 30, de choisir le domaine de l'application (par exemple document papier numérisé, vidéo, photo, son, ...) et de sélectionner les documents à archiver avant de lancer le processus d'indexation.

L'agent 302 de pilotage d'indexation reçoit la requête, analyse les arguments et active dans l'ordre le module d'acquisition 20, chargé de l'ouverture et de la lecture du contenu du document à archiver, le processeur de média 200 qui permet d'extraire la structure et les composants constituant le document et le module mémoire 100 pour fabriquer la signature composite qui sert à décrire et à représenter le document.

Au sein du module mémoire 100, pour chaque composant extrait du document, le serveur de document 300 appelle l'agent d'indexation 121 adéquat. Ainsi, l'agent IMAS est appelé pour indexer les composants de type image, l'agent TEMAS est appelé pour indexer les composants de type texte, l'agent AMAS est appelé pour indexer les composants de type signal sonore et l'agent VIMAS est appelé pour indexer les composants de type signal vidéo. La relation entre les différents composants qui définit la structure du document est enregistrée dans la base de données 101. On sauvegarde ainsi dans la base de données 101 uniquement la signature composite et le document d'origine. Un compte rendu du processus d'archivage est envoyé au client comme valeur de retour de la méthode d'archivage.

Un exemple de séquence d'instruction de commande de l'agent de pilotage d'indexation 302 est donné ci-dessous.

Tant qu'il y a un document à indexer faire

```
for (int i = 0 ; i<documents.length ; i++)
{
int documentId = idFactory.idNew0 ;
//activation de MediaAcquisition
Media*med = media.Acquisition(documents[i]) ;
someComponent*components=mediaProcessing(med) ;
for (int j = 0 ; j<components.length ; j++)
{
int componenld = idFactory.idNew0 ;

switch(Components[j].type)
case TEXT: {traceTEMAS=TEMAS(documentId,componentId,
components[j].Text) ;
        traceTextStore=addTextStore(documentId,compenentId,
components[j].Text) ;
        break ;
}
case PICTURE: (traceIMAS=IMAS(documentId,componentId,components
[j].Picture) ;
        break ;
}
if (success)
{
        traceImagStore=addImageStore(documentId,documents[i]) ;
        traceMediaStruct=addStructStore(documentId ,documents
[j].Struct) ;
}}}
```

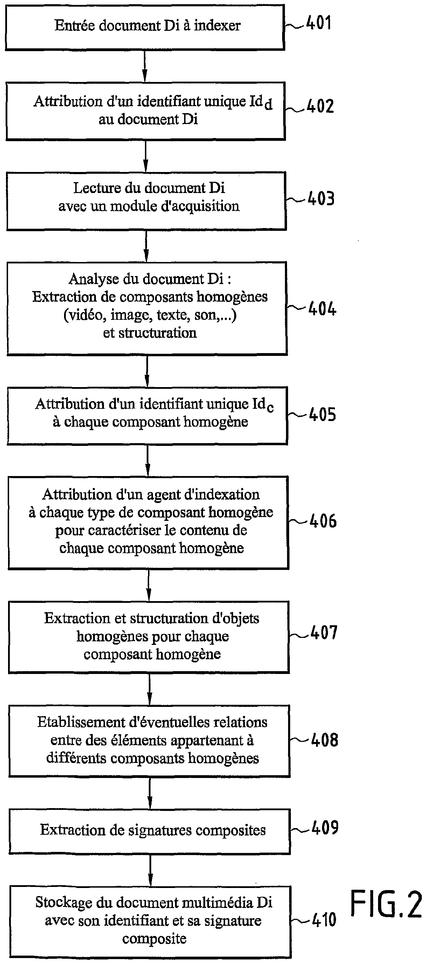

Les principales étapes 401 à 410 du procédé d'indexation d'un document multimédia selon l'invention sont résumées sur l'organigramme de la figure 2.

L'étape 401 consiste en l'entrée d'un document Di à indexer.

L'étape 402 consiste en l'attribution d'un identifiant unique Id, au document Di.

L'étape 403 consiste en la lecture du document Di avec un module d'acquisition.

L'étape 404 consiste en l'analyse du document Di avec extraction de composants homogènes (vidéo, image, texte, son,...) et structuration.

L'étape 405 consiste en l'attribution d'un identifiant unique $Id_c$ à chaque composant homogène.

L'étape 406 consiste en l'attribution d'un agent d'indexation à chaque type de composant homogène pour caractériser le contenu de chaque composant homogène.

L'étape 407 consiste en l'extraction et la structuration d'objets homogènes pour chaque composant homogène.

L'étape 408 consiste en l'établissement d'éventuelles relations entre des éléments appartenant à différents composants homogènes.

L'étape 409 consiste en l'extraction de séparateurs composites.

L'étape 410 comprend le stockage du document multimédia Di avec son identifiant et sa signature composite.

Ainsi, selon l'invention, on procède pour un document Di à archiver d'abord à une extraction et une structuration de composants homogènes puis pour chaque type de composant homogène, à une extraction et une structuration d'objets homogènes pour chaque composant homogène.

Par ailleurs, selon un aspect de l'invention, au niveau de l'extraction et de la structuration d'objets homogènes pour chaque composant homogène, on utilise au moins un agent d'indexation 121 spécialisé double (par exemple un agent IMAS) décomposable en au moins deux sous-agents (par exemple des agents PIMAS1 et PIMAS2) utilisant chacun un mode de traitement spécifique.

On donnera ci-dessous un exemple d'agent segmenteur destiné à être incorporé dans le processeur de média 200 et s'appliquant au traitement de documents papier contenant à la fois du texte et des images. Cet agent segmenteur permet de disséquer un document pour alimenter les différents agents indexeurs spécialisés tels que IMAS et TEMAS en éléments picturaux et éléments textuels respectivement. Les relations de structure entre les composants picturaux et textuels sont identifiées et seront intégrées dans la signature composite stockée dans la base de données.

La gestion électronique des documents entraîne le traitement d'images scannées en couleur, comprenant des fonds multiples incluant des zones texte, image et graphique. La résolution utilisée est de 300 dpi en général car elle permet une bonne reconnaissance des caractères imprimés, par les logiciels classiques de reconnaissance optique des caractères. La méthode proposée ci-dessus extrait les fonds de la page du document (format A4 en général) puis discerne les zones "texte", "graphique", et "image" en se basant sur des méthodes statistiques.

Cette segmentation peut également être appliquée sur des images classiques afin d'extraire des entités ou objets caractéristiques, ex. : ciel, toit, route, voiture, etc.

A titre d'exemple, on considérera une image numérisée au format JPEG en couleur et à la résolution 300 dpi.

En général, il s'agit de pages A4, soit 2480 x 3500 pixels c'est-à-dire pour un codage RGB-rouge vert bleu (8 bits par plans) environ 26 Moctets. Ces images sont transformées par un transcodage RGB vers HLS (Hue - teinte, luminance, saturation). Il est possible de ne traiter que la partie luminance afin de réduire le volume des données. La taille de cette bande luminance est d'environ 8 Moctets.

L'extraction des différents fonds est obtenue par recherches successives des maxima de l'histogramme cumulé.

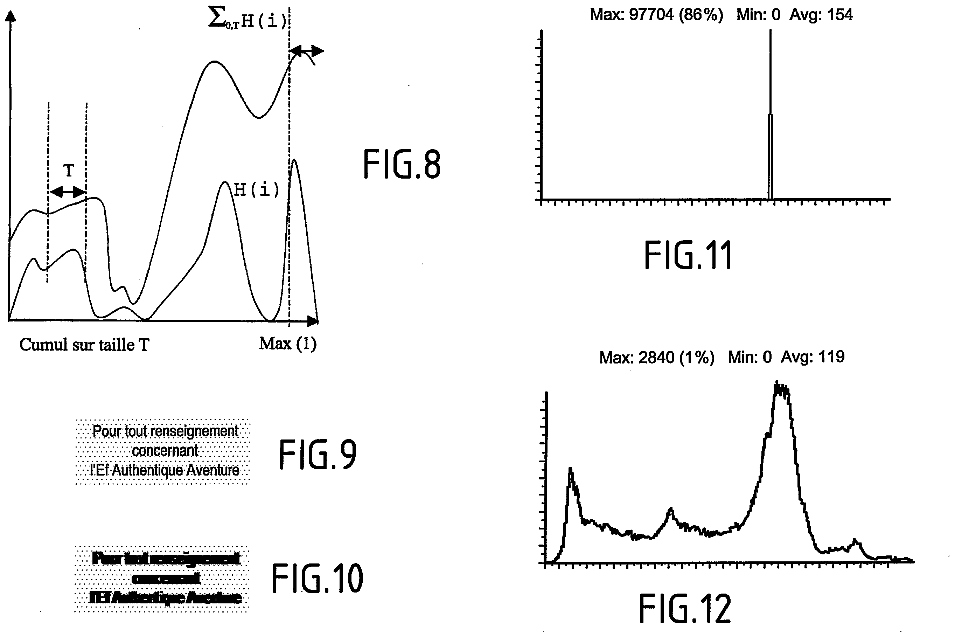

La méthode commence par un calcul de l'histogramme H(i) sur la bande luminance (Figure 8). On recherche ensuite le maximum de l'histogramme cumulé $H_c(n)$ sur un segment de taille T, selon l'équation :

$$H_C(n) = \sum_{j=n,n+T} H(j) \text{ et } i = \max(H_C(j)_{j=0,255-T}) \qquad (1)$$

Pour le premier maximum obtenu, i = Max(1), on propage une étiquette en appliquant un seuil dynamique et on conserve pour chaque région connexe labellisée sa taille en pixels. On ne valide cette région que si la taille est suffisante.

La valeur du niveau de gris du pixel est notée *val*.

Le pixel connexe d'où provient l'étiquetage (qui fait déjà partie de la région) a pour valeur *ancval*.

Le seuillage statique ne propage l'étiquette que si la valeur du pixel est comprise entre *i = Max(1)* et *i+T*.

Par contre le seuillage dynamique est plus tolérant :

Un coefficient C est introduit dans la méthode afin d'être plus souple lors de l'étiquetage.

Dans le cas où le critère statique n'est pas vérifié, c'est-à-dire val n'appartient pas au segment [seuil, seuil+T], deux tests sont effectués :

• Si seuil + T <= val et abs (val - ancval) <= T*C alors seuil = val - T
• si val <= seuil et abs (ancval - val) <= T*C alors seuil = val ;

Dans le critère dynamique, on s'aperçoit que le seuil varie et est fonction de la valeur du pixel.

Pour un coefficient égal à 1, seuls les pixels dont la valeur est comprise entre *i=Max(1) = seuil d'origine* et *i+T* seront pris en compte. On se ramène au cas du seuillage statique, la valeur du seuil reste constante et vaut *i =Max(1)*.

L'étiquetage est propagé suivant la connexité 4 ou 8 jusqu'à ce qu'aucun pixel ne réponde au critère. On vérifie alors que la région en cours d'étiquetage est de taille suffisante afin de la valider (introduction d'un nouveau paramètre *region_min_size).* Si sa taille est inférieure à *region_min_size,* on la rejette.

On poursuit le balayage de l'image en gardant la même valeur de *i=Max(1).*

Chaque pixel étiqueté lors de cette première étape (et dont la région d'appartenance a été validée) voit sa valeur mise à *déjà_étiqueté.*

On réitère ensuite le calcul de l'histogramme (en ne tenant compte que des pixels non étiquetés), on recherche le nouveau maximum *i = Max(2)* puis on recommence un seuillage dynamique.

Cette étape est réitérée jusqu'à ce qu'au moins 95 % des pixels de l'image soient traités.

A cette étape de l'algorithme, les différents fonds composant le document sont extraits. Les zones "texte" ou "caractères" sont à l'intérieur de fond sous forme "pixels non étiquetés" (Figure 9).

Une méthode de lissage RLSA ("run length smoothing algorithm") est appliquée verticalement et horizontalement, ceci pour fermer les trous et relier les caractères entre eux (Figure 10).

Les zones "graphiques" ou "image" ne sont en revanche pas ou peu affectées par cette opération.

Le résultat d'une méthode de lissage RLSA sur un bloc de type "image", donne ainsi une partie image qui est toujours vue comme un seul bloc.

Ensuite, un traitement RLC (Run Length coding) est appliqué afin d'extraire les différents blocs (rectangulaires) trouvés dans chaque fond.

Finalement, des méthodes statistiques sont appliquées sur ces blocs afin de déterminer leur nature (texte, image ou graphique).

Les mesures permettant l'application de ces méthodes statistiques sont :

- Mesure de la taille du bloc
- Calcul de l'histogramme dans chaque bloc (permettant de distinguer les blocs texte, graphique et image. Les blocs "texte" auront deux pics (le fond et les caractères), (Figure 11), les blocs "graphique" un nombre limité, par contre l'histogramme des blocs images sera plus large et dense (Figure 12).
- Mesure de la variance pour les pixels dont la valeur est différente de la moyenne du fond. Les blocs "texte" et "graphiques" auront une valeur faible par rapport aux blocs "image".
- Calcul de la variance en croix sur un voisinage 3x3, 5x5, 7x7, et 9x9.

$$\begin{bmatrix} v[1][4] & & & & & & v[2][4] \\ & v[1][3] & & & & v[2][3] & \\ & & v[1][2] & & v[2][2] & & \\ & & & v[1][1] \quad v[2][1] & & & \\ & & & val & & & \\ & & v[3][1] \quad v[4][1] & & & \\ & & v[3][2] & & v[4][2] & & \\ & v[3][3] & & & & v[4][3] & \\ v[3][4] & & & & & & v[4][4] \end{bmatrix}$$

note : val est la valeur du pixel pour I(0,0), v[1] [4] est la valeur du pixel pour I(- 4, -4), v[4] [4] est la valeur du pixel pour I(4,4), etc.

$m_i$ moyenne en croix taille i x i

$vc_i$ variance en croix de taille i x i

$$m_3 = ( v[1][1] + V[2][1] + v[3][1]+ v[4][1]+value)/5$$

$$VC_3 = ( v[1][1]^2 + v[2][1]^2 + v[3][1]^2 + v[4][1]^2 + value^2)/5 - m_3^2$$

Les $vc_i$ permettent de caractériser les blocs texte, graphique et image qui n'auraient pu être déterminés précédemment grâce à des méthodes de classification classiques comme les classificateurs linéaires, les classificateurs paramétriques ou non paramétriques ex : KMEAN (K plus proches voisins).

D'autres types d'agents de segmentation permettant de séparer des composants homogènes d'un document multimédia ou des objets homogènes au sein de composants homogènes peuvent naturellement être mis en oeuvre. Des exemples d'objets homogènes sont notamment des trames clés d'un signal vidéo, des zones texte à l'intérieur d'une trame ou d'une image, des formes spécifiques, des personnages, du son, un rythme,....

Le processus de segmentation décrit précédemment en référence à des images et des blocs textes peut s'appliquer de façon similaire, avec la même approche utilisant des histogrammes pour extraire les éléments d'un composant sonore d'un document multimédia.

Dans ce cas, l'extraction des différents composants homogènes (plage, note musicale, rythme, ...) d'un signal sonore est obtenue par recherches successives des maxima de l'histogramme cumulé. La méthode commence par un calcul de l'histogramme du signal ou de sa transformée (par exemple du type ondelette ou Fourier). On cherche ensuite le maximum de l'histogramme cumulé $H_c(m)$ sur un segment de taille T selon l'équation :

$$H_c(m) = \sum_{j=m-T/2,\ m+T/2} H(j)$$

On attribue un numéro au premier maximum obtenu et on propage ce numéro en appliquant un seuil dynamique. On conserve la plage si sa taille est suffisante.

On réitère le calcul d'histogramme sur les points non traités et on cherche un nouveau maximum, puis on recommence la propagation par un seuillage dynamique. Cette étape est réitérée jusqu'à ce qu'au moins 90 % des points soient traités. Une méthode de bouchage de trous de type RLSA permet de relier les plages ayant le même numéro et qui sont proches l'une de l'autre.

Dans le cas d'un signal vidéo, par exemple, un agent VIMAS d'indexation de composants de type vidéo pourra inclure un agent segmenteur permettant de regrouper les images qui se suivent et se ressemblent pour former une séquence homogène d'images dont certaines pourront elles-mêmes à leur tour être traitées par un agent IMAS d'indexation de composants de type image.

L'identification de séquences d'images homogènes peut se faire à partir d'une décomposition en ondelettes puis d'une comparaison des histogrammes bidirectionnels d'images qui se suivent.

Comme on l'a déjà indiqué précédemment, lors de la phase d'archivage, les objets (textes, images, signaux vidéo, sons, graphiques vectoriels animés) constituant un document multimédia fourni par un module d'acquisition sont identifiés, puis leur contenu ainsi que le graphe relationnel de ces constituants (structure) sont analysés par des agents spécialisés pour extraire et structurer chaque composant en objets homogènes et enfin produire une signature composite qui caractérise et représente le contenu de l'ensemble des éléments constituant le document multimédia. Les signatures composites sont stockées dans des bases de données 101 pour être comparées afin de localiser les documents désirés.

Lors de la phase de recherche, l'interface 40 de recherche de documents, l'agent de pilotage de recherche 303 du serveur de document 300 et l'agent de recherche spécialisé 122 d'un module mémoire 100 coopèrent pour identifier un document à l'intérieur d'un volume important de documents multimédia.

Les requêtes peuvent mêler des aspects textuels, acoustiques et picturaux, en utilisant dans les trois cas l'interrogation par le contenu. Pour les données picturales, il s'agit de retrouver les images ou les séquences d'images dont la signature répond à certains critères visuels (texture, couleur, forme, fragment spécifié par l'opérateur) ou sémantiques (description textuelle et graphe relationnel des objets présents dans l'image,...). Les requêtes acoustiques expriment le besoin de trouver les signaux (notes musicales par exemple) similaires. En utilisant les techniques d'analyse linguistique, l'interrogation du texte s'effectue en langage naturel. Le système permet de trouver des documents écrits avec une langue différente de celle de la question. La recherche en texte libre peut être pratiquée grâce aux outils d'analyse de la structure syntaxique et aux mécanismes de reformulation.

Le traitement des requêtes est effectué par le serveur de document 300 qui : analyse le contenu des requêtes composites puis, en fonction du profil opérateur, de la capacité de chaque agent d'indexation et de recherche, et du contexte de l'environnement, invoque les moteurs de recherche adéquats et effectue ensuite la synthèse des réponses.

Pour localiser les documents désirés, le processus de recherche exploite les informations produites lors de la phase d'archivage. Le processus de localisation des informations désirées est totalement transparent à l'opérateur. Celui-ci interagit avec le système via une interface visuelle et utilise des questions composites multimodales. Ces questions sont composées d'une ou plusieurs questions élémentaires : textuelles exprimées en langage naturel, picturales (question par l'exemple) ou même acoustiques. Ces questions élémentaires sont reliées par des opérateurs logiques (ET, OU, NON), des prédicats/attributs (Est un Titre, Titre de, Résumé, Objet, ...) et des opérateurs de factorisation. Ces différents liens expriment les contraintes que doivent satisfaire les documents réponses. Ainsi par exemple, la question composite constituée de deux questions élémentaires, une textuelle (Text1) et l'autre picturale (Image1) et où le lien est un prédicat défini par (Text1 est_la_legende Image1). Ce prédicat exprime la contrainte que seuls les documents contenant le texte "Text1" et l'image "Image1" et où Text1 est la légende de Image1 seront envoyés à l'opérateur. L'exécution de cette requête peut s'effectuer de deux manières :

Selon une première méthode, on commence d'abord par chercher tous les documents contenant des images ayant des légendes. Ensuite, ces documents sont filtrés pour ne garder que ceux contenant à la fois du "Text1" et "Image1". La première étape de la recherche utilise uniquement l'information structurelle des documents. Par contre, la deuxième étape fait appel au contenu des composants textuels et picturaux.

Selon une deuxième méthode, on commence par localiser en parallèle les documents contenant les composants textuels où "Text1" est présent et les documents contenant les composants picturaux où "Image1" est présente. Ensuite, la structure de chacun des documents est analysée pour ne garder que ceux désirés par l'opérateur : les composants textuels réponses doivent être la légende des composants picturaux réponses.

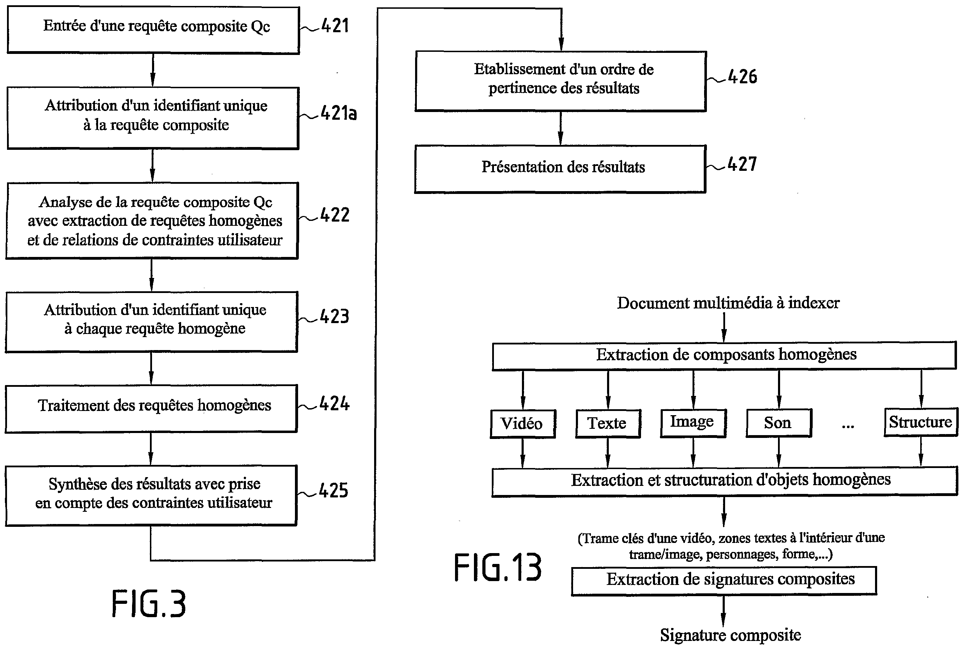

Les étapes principales du procédé de recherche de document multimédia sont représentées sur la figure 3.

L'étape 421 consiste à entrer une requête composite $Q_c$.

L'étape 421a consiste à attribuer un identifiant unique à la requête composite, cet identifiant servant à regrouper les réponses de la même requête.

L'étape 422 consiste à analyser la requête composite $Q_c$ et à extraire des requêtes homogènes et des relations de contraintes utilisateurs.

L'étape 423 consiste à attribuer un identifiant unique à chaque requête homogène.

L'étape 424 comprend le traitement des requêtes homogènes.

L'étape 425 consiste à effectuer la synthèse des résultats avec prise en compte des contraintes utilisateurs.

L'étape 426 comprend l'établissement d'un ordre de pertinence des résultats.

L'étape 427 comprend la présentation des résultats.

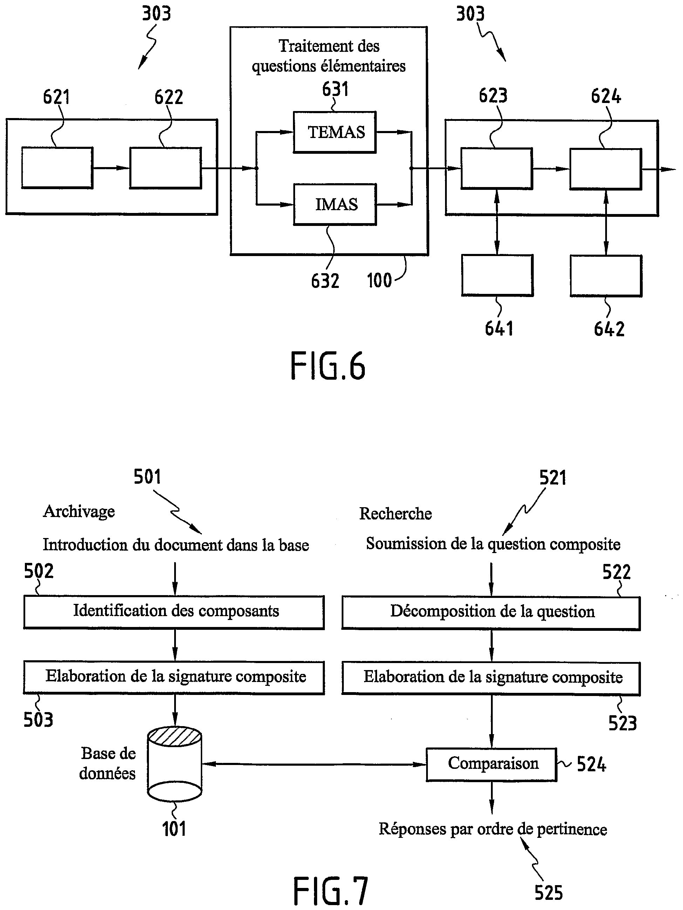

La figure 7 illustre de façon comparative les principales étapes d'un processus d'archivage, et les principales étapes d'un processus de recherche.

Lors de la phase d'archivage, on a ainsi une étape 501 d'introduction d'un document multimédia, une étape 502 d'identification des composants et une étape 503 d'élaboration d'une signature composite destinée à être archivée dans la base de données 101.

Lors de la phase de recherche, on a une étape 521 de soumission d'une question composite, une étape 522 de décomposition de la question, une étape 523 d'élaboration de la signature composite, une étape 524 de comparaison de la signature composite élaborée avec les signatures composites stockées dans la base de données 101 et une étape 525 de fourniture de réponses par ordre de pertinence.

Pour exprimer une requête ou question dans une phase de recherche, l'utilisateur se connecte au système en s'identifiant au processus de contrôle d'accès. Après vérification et succès de l'étape d'identification, une fenêtre d'accueil s'ouvre pour permettre à l'utilisateur d'exprimer sa requête composite qui est soumise au serveur de document 300.

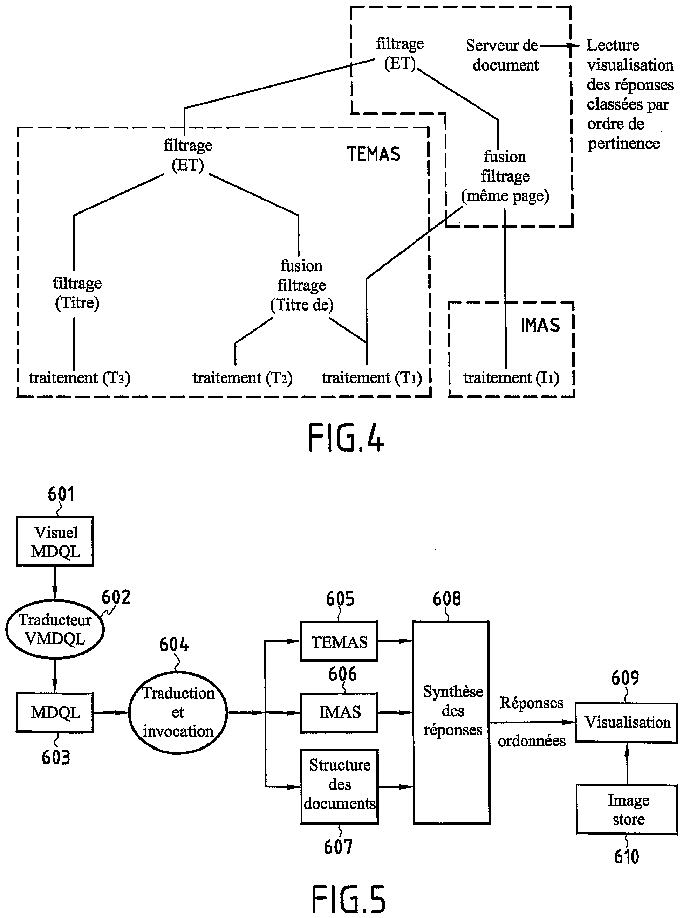

Selon un mode de réalisation particulier illustré sur la figure 5, l'opérateur exprime sa requête en utilisant un langage de description visuel appelé VMDQL (Visual Multimedia Document Query Language). A partir de la requête VMDQL (module 601), l'interface utilisateur (module 602) fabrique le script MDQL (module 603). Dans le module 604, des techniques d'analyse lexicale, syntaxique ainsi que sémantique sont utilisées pour d'une part analyser et vérifier la conformité de la syntaxe de la question par rapport à la grammaire du langage MDQL et d'autre part pour traduire la question utilisateur en un script des invocations à destination des agents de recherche (tels que l'agent TEMAS 605, l'agent IMAS 606, l'agent 607 de recherche de structure de documents) impliqués dans le traitement de la requête. Le script contient aussi des prédicats exprimant la manière dont les réponses envoyées par les différents agents doivent être synthétisées (module 608 de synthèse des réponses). Les réponses ordonnées font l'objet d'une visualisation (module 609) à partir des données stockées dans la base de données (module 610).

L'agent 303 de pilotage de recherche du serveur de document 300, qui est chargé de capturer une question et de veiller à son traitement est composé d'un certain nombre de modules élémentaires (voir Figure 6).

Un module 621 d'analyse de requête analyse et décompose la question ou requête composite en questions élémentaires puis pour chacune, par l'intermédiaire du module d'invocation 622 invoque l'agent de recherche le plus adéquat au sein du module mémoire 100. L'agent TEMAS 631 peut ainsi être invoqué pour traiter des questions textuelles tandis que l'agent IMAS 632 est invoqué pour traiter des questions picturales. Chacun de ces agents indexe les questions qu'il reçoit, puis afin de déterminer le score de ressemblance, compare ces index à ceux fabriqués lors de la phase d'archivage. Ces agents n'ont qu'une vision locale du document, ils reçoivent uniquement les composants qui les concernent ainsi qu'un objet reliant chacun des blocs à son document d'origine. Ainsi, la réponse retournée par un agent de recherche est constituée d'une suite de triplets (le score, la référence (idDocument) de l'objet associé, lors de la phase d'archivage, au document d'origine, l'identificateur du composant idComponent).

De façon plus particulière, le traitement des requêtes et la synthèse des réponses s'effectuent en quatre phases :

1. regroupement de termes du même type : dans le but de favoriser la synthèse des réponses localement (au niveau des agents de recherche) et appliquant le processus de factorisation et de permutation des opérateurs logiques, les termes de même type de l'équation de contraintes sont regroupés ensemble. Ainsi par exemple l'équation de contraintes :

- *(1) Text1 et Image1 et Text2 peut s'écrire :*
- *(2) Text1 et Text2 et Image1.*

  ▪ Dans l'équation (1) les requêtes Text1 et Text2 sont envoyées à l'agent TEMAS et Image1 est envoyée à l'agent IMAS. Après traitement de ces requêtes, l'agent TEMAS retourne deux listes de réponses textAnswers1 et textAnswers2 tandis que l'agent IMAS retourne une seule liste de réponses pictureAnswer (puisqu'il a reçu une seule requête). Les trois listes sont fusionnées (opération et) au niveau du serveur de document 300.

  ▪ Dans l'équation (2), la fusion des listes s'effectue en deux étapes, les réponses textAnswers1 et textAnswers2 sont fusionnées localement au niveau de l'agent TEMAS. Le résultat est envoyé au Serveur de document pour être fusionné avec le résultat envoyé par l'agent IMAS. Cette approche a pour avantage de réduire le temps de transfert des réponses ainsi que la place nécessaire au stockage des réponses intermédiaire dans le serveur de document.

2. Création d'un identificateur unique de la requête et invocations des agents de recherche en passant à chacun d'eux la liste des requêtes atomiques qui lui sont destinées. Ensuite chaque agent traite les requêtes qui lui sont affectées. Pour réduire le temps et si les ressources le permettent, les traitements des requêtes s'effectuent en parallèle. La gestion du parallélisme (la création et la distribution des tâches et la coordination des traitements sont des fonctions de base du système), est transparente à l'utilisateur.

3. Fusion localement des réponses de même type au niveau des agents de recherche puis fusion globale des listes de réponses au niveau du serveur de document. Pour assurer l'efficacité et la robustesse du processus de recherche, l'invocation, le traitement des requêtes et la fusion des réponses aussi bien locale que globale sont assurés par un automate. Par souci de clarté, la grammaire de cet automate est présentée en s'inspirant de la syntaxe de YACC(). YACC (signifie "yet another compiler compiler") est un générateur d'analyseur sémantique, c'est-à-dire un programme qui convertit une spécification grammaticale d'un langage en un analyseur de ce langage. Une grammaire est constituée d'un certain nombre de règles de production. YACC permet d'associer à chacune des règles une action qui est exécutée lorsque la règle est satisfaite. Cette action est écrite en langage C/C++ avec des conventions permettant de relier le code écrit avec la grammaire :

```
ConstraintEquation : unaryConstraint ConstraintEquation (1)
                    {
                     action1(...) {...}
                    }
                    | binaryConstraint ConstraintEquation (2)
                    {
                     action2(...) {...}
                    } ;
```

Dans cet exemple, la grammaire est constituée de deux règles de production (1) et (2). A la règle (1) est associée l'action1() qui est exécutée une fois que la règle est résolue. Pour plus de détail voir (lex & YACC de John R. Levine, Tony Masson & Doug Brown édité par O'Reilly & Associates, Inc).

La grammaire de l'automate utilisé pour traiter une requête multimédia et effectuer la synthèse des réponses est constituée de 20 règles de production (1) à chacune desquelles est associée une action.

**(1) constraintEquation ::    unaryConstraint**

{

transmission du résultat final au serveur de document

action1

}

**(2)              | binaryConstraint**

{

transmission du résultat final au serveur de document

action2

}

**(2) bis           | n-aryConstraint**

{

transmission du résultat final au serveur de document

action2

}

**(3)              | unaryConstraint OPERATOR constraintEquation**

{

fusion par le module mémoire, des listes réponses au fur et à mesure de leurs arrivées et transmission du résultat final au serveur de document

```
}
(4)              | binaryConstrain OPERATOR constraintEquation
{
```

fusion, par le module mémoire, des listes réponses au fur et à mesure de leurs arrivées et transmission du résultat final au serveur de document

```
}
(4bis)           | n-naryConstrain OPERATOR constraintEquation
{
```

fusion, par le module mémoire, des listes réponses au fur et à mesure de leurs arrivées et transmission du résultat final au serveur de document

```
}
(5)              | (constraintEquation)
  {
```

transmission du résultat final au serveur de document

```
}
(6)              | VIDE

                 ;
(7) binaryConstraint:: homogeneousBinary
{
```

transmission de la liste résultat au module mémoire

```
}
(8)              | heterogeneousBinary
{
```

transmission de la liste résultat au module mémoire

```
}
                 ;
(9) unaryConstraint::    TEXT
  {
```

invocation de TEMAS ; traitement de la requête et transmission des réponses

```
}
(10)             | TEXT ATTRIBUT
{
```

invocation de TEMAS ; traitement de la requête ; filtrage des résultats localement et transmission de la liste réponses

}

**(11)** |**PICTURE**

{ invocation de IMAS ; traitement de la requête et transmission de la liste réponses au serveur de document

}

**(12)** |**PICTURE ATTRIBUT**

{

invocation de IMAS ; traitement de la requête ; filtrage des résultats localement et transmission des réponses

}

**(11bis)** |**SOUND**

invocation de AMAS ; traitement de la requête et transmission de la liste réponses au serveur de document

}

**(12bis)** |**SOUND ATTRIBUT**

invocation de IMAS ; traitement de la requête ; filtrage des résultats localement et transmission des réponses

}

;

**(13) heterogeneousBinary:: TEXT OPERATOR PICTURE**

{

invocation de TEMAS et IMAS pour traiter respectivement la requête textuelle et la requête picturale puis transmission des deux listes réponses au module mémoire qui se charge de fusionner les réponses

}

**(14)** |**PICTURE OPERATOR TEXT**

{

invocation de TEMAS et IMAS pour traiter respectivement la requête textuelle et la requête picturale puis transmission des deux listes réponses au module mémoire qui se charge de fusionner les réponses

}

;

**(15) homogeneousBinary::** |**TEXT OPERATOR TEXT**

```
{
    invocation de TEMAS pour traiter les deux requêtes textuelles puis
fusion localement des deux listes réponses et transmission de la liste
résultat au module mémoire.
}
(16)            | PICTURE OPERATOR PICTURE ;
    invocation d'IMAS pour traiter les deux requêtes picturales puis fusion
localement des deux listes réponses et transmission de la liste résultat au
module mémoire.
}

            ;
```

Dans les vingt règles de grammaire qui précèdent, la règle 1 signifie qu'il existe une contrainte unaire (par exemple il existe un seul composant image, texte, son ou vidéo).

La règle 2 signifie qu'il existe une contrainte binaire (par exemple il existe deux composants image, texte, son ou vidéo).

La règle 2bis signifie qu'il existe une contrainte n-aire (par exemple il existe plus de deux composants image, texte, son ou vidéo).

La règle 3 signifie qu'il existe une contrainte binaire liée par un opérateur à l'équation de contrainte.

La règle 4 signifie qu'il existe une contrainte binaire liée par un opérateur à l'équation de contrainte.

La règle 4bis signifie qu'il existe une contrainte n-aire liée par un opérateur à l'opérateur de contrainte.

La règle 5 signifie une mise entre parenthèses.

La règle 6 correspond à une condition d'arrêt après analyse.

La règle 7 correspond au cas d'une contrainte binaire homogène (par exemple il existe deux composants du même type soit image, soit texte, soit son, soit vidéo).

La règle 8 correspond au cas d'une contrainte binaire hétérogène (par exemple il existe deux composants n'appartenant pas au même type tels que texte et image, son et image,)...

La règle 9 signifie que le cas de contrainte binaire correspond à un composant texte.

La règle 10 signifie qu'il existe un attribut de texte (par exemple "est un titre").

La règle 11 signifie que le cas de contrainte binaire correspond à un composant image.

La règle 12 signifie qu'il existe un attribut d'image (par exemple "est une image de vidéo").

La règle 11bis signifie que le cas de contrainte binaire correspond à un composant son.

La règle 12bis signifie qu'il existe un attribut de son (par exemple "est un son de vidéo").

La règle 13 signifie que dans le cas d'hétérogénéité binaire, un texte est lié par un opérateur à une image (l'opérateur pouvant être par exemple "est dans la même page", "est la légende de").

La règle 14 signifie que dans le cas d'hétérogénéité binaire, une image est liée par un opérateur à un texte (l'opérateur pouvant être par exemple "est à gauche de").

La règle 15 signifie que dans le cas d'homogénéité binaire, un texte est lié par un opérateur à un texte, (l'opérateur pouvant être par exemple " est le titre de").

La règle 16 signifie que dans le cas d'homogénéité binaire, une image est liée par un opérateur à une image (l'opérateur pouvant être par exemple "est dans le même document").

Un module 623 d'analyse de réponse collecte les réponses envoyées par les différents agents de recherche. Il utilise les contraintes exprimées par l'utilisateur. Il récupère dans le module 641 de la base de données 101 les structures de documents réponses. Après analyse de ces structures pour filtrer et calculer le score de pertinence de chacune des réponses et déterminer les réponses correspondant aux attentes de l'utilisateur, un module 624 regroupe les résultats de la recherche et communique avec le module 642 de stockage de document de la base de données 101 pour fournir les résultats demandés. Les résultats de la recherche sont envoyés sous la forme de listes ordonnées suivant un critère synthétique des différents calculs de proximité mis en oeuvre.

On a donné sur la figure 4 un exemple de requête composite constituée par une requête visuelle, d'abord traduite en question textuelle, avec les définitions suivantes :

$T_1$ = objet texte $I_1$ = objet image

$T_2$ = objet texte

$T_3$ = objet texte

"$T_1$ est le titre de $T_2$" et, "$T_3$ est un titre" "$T_1$ et $I_1$ sont sur la même page".

Les contraintes définies par l'utilisateur sont donc ici au nombre de trois, qui constituent des questions élémentaires ou atomiques.

La première contrainte "$T_1$ est le titre de $T_2$" constitue une question binaire (règle 2), homogène (règle 7) avec un opérateur "est le titre de" (règle 15).

L'agent TEMAS dédié à la recherche d'objets de type texte est donc invoqué pour rechercher les documents comportant les textes $T_1$ et $T_2$, puis on fait la fusion des réponses avec un filtrage par la relation "est le titre de" pour ne garder que le document réponse où les réponses correspondant à $T_1$ sont les titres de $T_2$.

On garde une liste de références des documents triés $D_1$, $D_2$, ... $D_n$ avec les identificateurs des documents qui répondent à la question "$T_1$ est le titre de $T_2$".

On traite ensuite la deuxième contrainte avec attribut "$T_3$ est un titre".

Cette question est de type unaire (règle 1), textuelle (règle 9).

On invoque l'agent de recherche TEMAS qui envoie les documents dans lesquels le texte $T_3$ ou un texte similaire apparaissent. On opère un filtrage par la relation "est un titre" qui est associée au titre $T_3$ et on retient une liste de documents $D'_1$, $D'_2$, ... avec les identificateurs des documents qui répondent à la question "$T_3$ est un titre".

On opère ensuite une fusion locale au niveau de l'agent TEMAS entre les listes $D_1$, $D_2$... et $D'_1$, $D'_2$ avec filtrage par l'opérateur ET pour ne retenir que les documents communs.

La contrainte "$T_1$ est dans la même page que I", constitue une relation binaire (règle 2) hétérogène (règle 8) qui fait intervenir un opérateur (règle 13).

On invoque donc les agents TEMAS et IMAS pour traiter respectivement la requête textuelle ($T_1$) et la requête picturale ($I_1$). Les deux listes de réponses sont transmises au serveur de document qui assure la fusion des réponses avec le filtrage de la relation "est dans la même page que".

On opère enfin au niveau du serveur de document la fusion et le filtrage avec l'opérateur ET des listes de documents issus d'une part du traitement précédent et d'autre part du filtrage précédemment opéré au niveau de l'agent TEMAS.

Un score de pertinence est calculé à chaque filtre. Le score se propage et est mis à jour à chaque filtre. On peut en outre avoir un traitement de données partielles, comme par exemple "ne retenir que les réponses après une certaine date".

D'une manière générale, dans une requête composite, une requête élémentaire est traitée à l'intérieur d'un même module de traitement si elle est homogène, la synthèse des réponses s'effectuant au même niveau, mais une requête élémentaire hétérogène qui implique l'intervention de plusieurs modules de traitement est traitée à la fois au niveau local et au niveau global au sein de l'agent de pilotage de recherche 303 du serveur de document 300.

## Revendications

1. Procédé de gestion d'une base de données multimédia, comprenant les étapes suivantes :

   - création (402, 405) d'un agent allocateur d'identifiant pour associer une référence unique (Id, Idc) à chaque document multimédia (Di), ou élément d'un document multimédia (Di),
   - acquisition (403) d'un document multimédia (Di) à contenu hétérogène comprenant des informations appartenant à au moins l'une des catégories de type suivantes : image, vidéo, son, texte, graphiques vectoriels animés,
   - indexation du document multimédia (Di) comprenant :

      a1/ analyse du document multimédia pour extraire d'une part des composants homogènes appartenant chacun à une catégorie de même type de contenu des composants homogènes du document multimédia et d'autre part des relations entre ces composants homogènes, les relations entre les composants homogènes étant identifiées en fonction d'un graphe d'objets établissant les relations entre les différents composants du document,
      b1/ caractérisation du contenu de chacun des composants homogènes et établissement de relations entre des éléments du contenu de chacun de ces composants homogènes, à partir du contenu sémantique de ceux-ci
      c1/ production d'une signature composite regroupant des index de chacun des composants homogènes, obtenus lors de ladite caractérisation du contenu, les relations précédemment identifiées et l'ensemble des identifiants précédemment acquis,

- stockage (410) du document multimédia (Di) indexé avec sa signature composite, et
- recherche d'un document multimédia (Di) précédemment indexé et stocké, à l'aide d'une requête composite, comprenant :

a2/ analyse de la requête composite pour extraire des requêtes homogènes se référant à une catégorie du même type
b2/ traitement des requêtes homogènes,
c2/ synthèse des résultats du traitement des requêtes homogènes,
d2/ établissement d'un ordre de pertinence des résultats et présentation des résultats,

où l'étape d'indexation est effectuée à l'aide d'au moins un agent d'indexation (121) comprenant au moins deux sous-agents adaptés pour appliquer des modes de traitement spécifique d'indexation par rapport à des éléments de types différents faisant partie d'un document multimédia, et où l'étape de recherche est effectuée à l'aide d'au moins un agent de recherche (122) comprenant au moins deux agents secondaires adaptés pour appliquer des modes de traitement spécifique de recherche par rapport à des éléments de types différents faisant partie d'un document multimédia.

**2.** Procédé selon la revendication 1, **caractérisé en ce que**, lors de la recherche d'un document multimédia précédemment indexé et stocké, lors du traitement des requêtes homogènes, la réponse retournée par un agent de recherche est constituée d'une suite de triplets comprenant le score de ressemblance après comparaison de signatures composites de requêtes à des signatures composites fabriquées lors de la phase d'indexation, l'identifiant de l'objet associé lors de la phase d'indexation au document d'origine et l'identifiant d'un composant de la requête homogène.

**3.** Système de gestion d'une base de données multimédia comprenant des documents multimédia à contenu hétérogène comprenant des informations appartenant à au moins l'une des catégories de type suivantes :

image, vidéo, son, texte, graphiques vectoriels animés, pour la mise en oeuvre du procédé selon la revendication 1, comprenant :

a/ un ensemble d'unités spécialisées opérationnelles comprenant au moins :

a0/ un dispositif (402, 405) de création d'un agent allocateur d'identifiant,
a1/ un dispositif d'acquisition (20) d'au moins un document multimédia,
a2/ une base de données multimédia (101),
a3/ au moins un agent d'indexation (121) comprenant au moins deux sous-agents adaptés pour appliquer des modes de traitement spécifique d'indexation par rapport à des éléments de types différents faisant partie d'un document multimédia, ,
a4/ au moins un agent de recherche (122) comprenant au moins deux sous-agents adaptés pour appliquer des modes de traitement spécifique de recherche par rapport à des éléments de type différents faisant partie d'un document multimédia,
a5/ une unité (123) dédiée à la gestion des informations décrivant la structure des documents,
a6/ un dispositif (200) de caractérisation du contenu d'un document multimédia d'entrée et d'extraction et de structuration des composants du document, en produisant des signatures composites constituées par la caractérisation des composants des documents archivés et par des descriptions de la structure des documents archivés identifiant les relations entre les composants de type homogène des documents archivés.
a7/ une interface utilisateur (80), avec :

a7-1/ une interface (30) d'indexation de documents,
a7-2/ une interface (40) de recherche de documents,

a8/ un dispositif (70) de création, de démarrage et de destruction d'une base de données multimédia, et
a9/ un dispositif de commande (71) d'ouverture de session, et de pilotage, par l'utilisateur, du dispositif (70) de création, de démarrage et de destruction d'une base de données multimédia ,

b/ un ensemble d'unités spécialisées fonctionnelles comprenant au moins :

b1/ une unité (301) d'optimisation des différentes unités du système,

b2/ une unité (302) de pilotage d'indexation de documents,

b3/ une unité (303) de pilotage de recherche de documents, et

b4/ un gestionnaire (60) d'identifiants adapté pour associer une référence unique à chaque élément d'un document multimédia, et

c/ un dispositif (10) d'interconnexion et d'intercommunication des unités spécialisées opérationnelles et des unités spécialisées fonctionnelles et où la base de données multimédia comprend à la fois les références des documents à archiver et des signatures composites constituées par la caractérisation des composants des documents archivés et par des descriptions de la structure des documents archivés identifiant les relations entre les composants homogènes des documents archivés.

4. Système selon la revendication 3, **caractérisé en ce que** ledit agent d'indexation (121) décomposable en au moins deux sous-agents est un agent chargé d'indexer des éléments de type image et **en ce que** ledit agent de recherche (122) décomposable en au moins deux sous-agents est un agent chargé de rechercher des éléments de type image.

5. Système selon la revendication 3 ou la revendication 4, **caractérisé en ce que** ledit dispositif (200) d'analyse du contenu d'un document multimédia d'entrée et d'extraction de la structure des composants du document comprend une première unité de traitement et d'analyse d'image ou de signal, d'analyse statistique, de modélisation et de classification pour regrouper les éléments d'un document d'entrée en composants homogènes et une unité de production de la structure du document, ou graphe d'objets établissant les relations entre les différents composants du document.

6. Système selon l'une quelconque des revendications 3 à 5, **caractérisé en ce qu'**il comprend une unité d'indexation chargée d'indexer des objets de type texte et une unité de recherche chargée de rechercher des objets de type texte.

7. Système selon l'une quelconque des revendications 3 à 6, **caractérisé en ce qu'**il comprend une unité d'indexation chargée d'indexer des objets de type son et une unité de recherche chargée de rechercher des objets de type son.

8. Système selon l'une quelconque des revendications 3 à 7, **caractérisé en ce qu'**il comprend une unité d'analyse chargée d'extraire les éléments images, les éléments sons et les éléments caractérisant la dynamique de ces derniers, une unité d'indexation chargée d'indexer des éléments de type vidéo et une unité de recherche chargée de rechercher des éléments de type vidéo.

9. Système selon l'une quelconque des revendications 3 à 8, **caractérisé en ce qu'**il comprend plusieurs dispositifs (200) d'analyse du contenu d'un document multimédia d'entrée et d'extraction et de structuration des composants du document, chacun de ces dispositifs d'analyse de contenu, d'extraction et de structuration étant adapté à un type de document spécifique identifié par la nature de son contenu (image, texte, son, vidéo).

**Patentansprüche**

1. Verfahren zum Verwalten von einer Multimedia-Datenbank, umfassend die folgenden Schritte:

- Erzeugen (402, 405) eines Identifikationszuweisungsagenten, um jedem Multimedia-Dokument (Di) oder Element eines Multimedia-Dokuments (Di) eine eindeutige Referenz (Id, Idc) zuzuordnen,
- Erlangen (403) eines Multimedia-Dokuments (Di) mit heterogenem Inhalt, das Informationen aufweist, die zu mindestens einer der Kategorien der folgenden Typen gehören: Bild, Video, Ton, Text, animierte Vektorgrafiken,
- Indexieren des Multimedia-Dokuments (Di), umfassend:

a1/ Analysieren des Multimedia-Dokuments, um einerseits homogene Komponenten, die jeweils zu einer Kategorie des gleichen Inhaltstyps der homogenen Komponenten des Multimedia-Dokuments gehören, und andererseits Beziehungen zwischen diesen homogenen Komponenten zu extrahieren, wobei die Beziehungen zwischen den homogenen Komponenten in Abhängigkeit von einer graphischen Darstellung von Objekten identifiziert werden, die die Beziehungen zwischen den verschiedenen Komponenten des Dokuments erstellen,

b1/ Charakterisieren des Inhalts jeder der homogenen Komponenten und Erstellen von Beziehungen zwischen Elementen des Inhalts von jeder dieser homogenen Komponenten ausgehend von dem semantischem Inhalt von diesen,

c1/ Erstellen einer Verbundsignatur, die Indizes von jeder der homogenen Komponenten, die während des Charakterisieren des Inhalts erhalten werden, die vorher identifizierten Beziehungen und alle vorher erworbenen Kennungen zusammenfasst,

- Speichern (410) des indexierten Multimedia-Dokuments (Di) mit seiner Verbundsignatur und
- Suchen eines zuvor indexierten und gespeicherten Multimedia-Dokuments (Di) mitttels einer Verbundanfrage, umfassend:

a2/ Analysieren der Verbundanfrage, um homogene Anfragen, die sich auf eine Kategorie des gleichen Typs beziehen, zu extrahieren,
b2/ Verarbeiten der homogenen Anfragen,
c2/ Zusammenfassen der Ergebnisse des Verarbeitens der homogenen Anfragen,
d2/ Erstellen von einer Reihenfolge nach Relevanz der Ergebnisse und Darstellen der Ergebnisse,

wobei der Schritt des Indexierens mit Hilfe von mindestens einem Indexierungsagenten (121) durchgeführt wird, der mindestens zwei Subagenten aufweist, die geeignet sind, spezifische Verarbeitungsmodi der Indexierung in Bezug auf Elemente verschiedener Typen anzuwenden, die Teil eines Multimedia-Dokuments sind, und wobei der Schritt des Suchens mit Hilfe von mindestens einem Suchagenten (122) durchgeführt wird, der mindestens zwei Sekundäragenten aufweist, die geeignet sind, spezifische Suchverarbeitungsmodi in Bezug auf Elemente verschiedener Typen anzuwenden, die Teil eines Multimedia-Dokuments sind.

2. Verfahren gemäß Anspruch 1, **dadurch gekennzeichnet, dass** beim Suchen eines zuvor indexierten und gespeicherten Multimedia-Dokuments beim Verarbeiten der homogenen Anfragen die von einem Suchagenten zurückgegebene Antwort aus einer Abfolge von Triples besteht, die den Ähnlichkeits-Score nach Vergleich von Verbundsignaturen von Anfragen mit Verbundsignaturen, die während der Phase des Indexierens erstellt werden, die Kennung des Objekts, das während der Phase des Indexierens dem ursprünglichen Dokument zugeordnet wird, und die Kennung einer Komponente der homogenen Anfrage aufweist.

3. System zum Verwalten von einer Multimedia-Datenbank, umfassend Multimedia-Dokumente mit heterogenem Inhalt, das Informationen aufweist, die zu mindestens einer der Kategorien der folgenden Typen gehören:

Bild, Video, Ton, Text, animierte Vektorgrafiken, zum Umsetzen des Verfahrens gemäß Anspruch 1, umfassend:

a/ eine Anordnung spezialisierter operativer Einheiten, die mindestens Folgendes aufweisen:

a0/ eine Vorrichtung (402, 405) zum Erzeugen eines Identifikationszuwe isungsagenten,
a1/ eine Vorrichtung zum Erlangen (20) von mindestens einem Multimedia-Dokument,
a2/ eine Multimedia-Datenbank (101),
a3/ mindestens einen Indexierungsagenten (121), der mindestens zwei Subagenten aufweist, die geeignet sind, um spezifische Verarbeitungsmodi der Indexierung in Bezug auf Elemente verschiedener Typen anzuwenden, die Teil eines Multimedia-Dokuments sind,
a4/ mindestens einen Suchagenten (122), der mindestens zwei Subagenten aufweist, die geeignet sind, um spezifische Suchverarbeitungsmodi in Bezug auf Elemente verschiedener Typen anzuwenden, die Teil eines Multimedia-Dokuments sind,
a5/ eine Einheit (123), die der Verwaltung der Informationen gewidmet ist, die die Struktur der Dokumente beschreibt,
a6/ eine Vorrichtung (200) zum Charakterisieren des Inhalts eines eingehenden Multimedia-Dokuments und zum Extrahieren und zum Strukturieren der Komponenten des Dokuments, indem Verbundsignaturen erstellt werden, die durch die Charakterisierung der Komponenten der archivierten Dokumente und durch Beschreibungen der Struktur der archivierten Dokumente, die die Beziehungen zwischen den Komponenten homogenen Typs der archivierten Dokumente identifizieren, gebildet sind,
a7/ eine Benutzerschnittstelle (80) mit:

a7-1/ einer Schnittstelle (30) zum Indexieren von Dokumenten,
a7-2/ einer Schnittstelle (40) zum Suchen von Dokumenten,

a8/ einer Vorrichtung (70) zum Erstellen, Starten und Vernichten einer Multimedia-Datenbank und

a9/ eine Steuervorrichtung (71) zum Beginnen einer Sitzung und zum Steuern der Vorrichtung (70) durch den Benutzer zum Erstellen, zum Starten und zum Vernichten einer Multimedia-Datenbank,

b/ eine Anordnung von spezialisierten funktionalen Einheiten, die mindestens aufweist:

b1/ eine Einheit (301) zum Optimieren der verschiedenen Einheiten des Systems,

b2/ eine Einheit (302) zum Steuern des Indexierens von Dokumenten,

b3/ eine Einheit (303) zum Steuern des Suchens von Dokumenten und

b4/ einen Verwalter (60) von Kennungen, der geeignet ist, jedem Element eines Multimedia-Dokuments eine eindeutige Referenz zuzuordnen, und

c/ eine Vorrichtung (10) zur Zusammenschaltung und Interkommunikation der spezialisierten operativen Einheiten und der spezialisierten funktionalen Einheiten und wobei die Multimedia-Datenbank gleichzeitig die Referenzen der zu archivierenden Dokumente und der Verbundsignaturen aufweist, die durch die Charakterisierung der Komponenten der archivierten Dokumente und durch Beschreibungen der Struktur der archivierten Dokumente, die die Beziehungen zwischen den homogenen Komponenten der archivierten Dokumente identifizieren, gebildet sind.

4. System gemäß Anspruch 3, **dadurch gekennzeichnet, dass** der Indexierungsagent (121), der in mindestens zwei Subagenten zerlegbar ist, ein Agent ist, der damit beauftragt ist, Elemente des Typs der Bildelemente zu indexieren, und dadurch, dass der Suchagent (122), der in mindestens zwei Subagenten zerlegbar ist, ein Agent ist, der damit beauftragt ist, Elemente des Typs der Bildelemente zu suchen.

5. System gemäß Anspruch 3 oder 4, **dadurch gekennzeichnet, dass** die Vorrichtung (200) zum Analysieren des Inhalts eines eingehenden Multimedia-Dokuments und zum Extrahieren der Struktur der Komponenten des Dokuments eine erste Einheit zum Verarbeiten und Analysieren eines Bildes oder Signals, zum statischen Analysieren, zur Modellierung und Klassifizierung, um die Elemente eines eingehenden Dokuments in homogene Komponenten zusammenzufassen, und eine Einheit zum Herstellen der Struktur des Dokuments oder einer graphischen Darstellung von Objekten, die die Beziehungen zwischen den verschiedenen Komponenten des Dokuments erstellen, aufweist.

6. System gemäß einem der Ansprüche 3 bis 5, **dadurch gekennzeichnet, dass** es eine Einheit zum Indexieren, die damit beauftragt ist, Objekte des Typs der Text-Objekte zu indexieren, und eine Einheit zum Suchen aufweist, die damit beauftragt ist, Objekte des Typs der Text-Objekte zu suchen.

7. System gemäß einem der Ansprüche 3 bis 6, **dadurch gekennzeichnet, dass** es eine Einheit zum Indexieren, die damit beauftragt ist, Objekte des Typs der Ton-Objekte zu indexieren, und eine Einheit zum Suchen aufweist, die damit beauftragt ist, Objekte des Typs der Ton-Objekte zu suchen.

8. System gemäß einem der Ansprüche 3 bis 7, **dadurch gekennzeichnet, dass** es eine Einheit zum Analysieren, die damit beauftragt ist, die Bildelemente, die Tonelemente und die Elemente, die die Dynamik dieser Letzteren charakterisieren, zu extrahieren, und eine Einheit zum Indexieren, die damit beauftragt ist, Elemente des Typs der Videoelemente zu indexieren, und eine Einheit zum Suchen aufweist, die damit beauftragt ist, Elemente des Typs der Videoelemente zu suchen.

9. System gemäß einem der Ansprüche 3 bis 8, **dadurch gekennzeichnet, dass** es mehrere Vorrichtungen (200) zum Analysieren des Inhalts eines eingehenden Multimedia-Dokuments und zum Extrahieren und zum Strukturieren der Komponenten des Dokuments aufweist, wobei jede dieser Vorrichtungen zum Analysieren des Inhalts, zum Extrahieren und zum Strukturieren für einen spezifischen Dokumententyp geeignet ist, der durch die Art seines Inhalts identifiziert ist (Bild, Text, Ton, Video).

**Claims**

1. A method of managing a multimedia database, comprising the following steps:

- creating (402, 405) an identifier allocator agent for associating a unique reference (Id, $Id_c$) with each multimedia document or element of a multimedia document (Di);

- acquiring (403) a multimedia document (Di) of heterogeneous content comprising information belonging to at least one of the following categories of type: image, video, sound, text, animated vector graphics;

- indexing the multimedia document (Di), where indexing comprises:

a1) analyzing the multimedia document to extract both homogeneous components each belonging to a category of the same type of content of the homogeneous components of the multimedia document, and also to extract relationships between said homogeneous components, the relationships between the homogeneous components being identified as a function of a graph of objects establishing the relationships between the different components of the document;

b1) characterizing the content of each of the homogeneous components and establishing relationships between the elements of the content of each of said homogeneous components based on the semantic content thereof;

c1) producing a composite signature combining the indices of each of the homogeneous components obtained during said content characterization, the previously identified relationships, and all of the previously acquired identifiers;

- storing (410) the indexed multimedia document together with its composite signature; and

- searching a multimedia document (Di) as previously indexed and stored using a composite request, searching comprising:

a2) analyzing the composite request to extract homogeneous requests referring to a category of a single type;

b2) processing the homogeneous requests;

c2) synthetizing results of processing homogeneous requests;

d2) establishing a pertinence order for the results and presenting the results

wherein the indexing step is made using at least an indexing agent (121) comprising at least two subagents using specific processing modes of indexing with respect to elements of different types being part of a multimedia document, and wherein the searching step is made using at least a search agent (122) comprising at least two subagents using specific processing modes of searching with respect to elements of different types being part of a multimedia document.

2. A method according to claim 1, **characterized in that** while searching for a previously indexed and stored multimedia document, during the processing of homogeneous requests, the response returned by a search agent is constituted by a sequence of triplets comprising the similarity score after comparing the composite signatures of requests with the composite signatures prepared during the indexing stage; the identifier of the object associated during the indexing stage with the original document; and the identifier of a component of the homogeneous request.

3. A system for managing a multimedia database comprising multimedia documents with heterogenous content comprising information belonging to at least one of the following categories of type : image, video, sound, text, animated vector graphics, for implementing the method of claim 1, comprising :

a) a set of specialized operational units comprising at least:

a0) a device (402, 405) for creating an identifier of an allocating agent;

a1) an acquisition device (20) of at least a multimedia document;

a2) a multimedia database (101);

a3) at least one indexing agent (121) comprising at least two subagents using specific processing modes of indexing with respect to elements of different types being part of a multimedia document;

a4) at least one search agent (122) comprising at least two subagents each using specific processing modes of searching with respect to elements of different types being part of a multimedia document;

a5) a unit (123) dedicated to managing information describing the structure of the documents;

a6) a device (200) for characterizing the content of an input multimedia document and for extracting and structuring components from the document by producing composite signatures constituted by characterizing components of the archived documents and by descriptions of the structure of the archived documents identifying the relationships between the components of homogeneous type of archived documents ;

a7) a user interface (80) having:

a7-1) a document indexing interface (30);
a7-2) a document search interface (40);

a8) a device (70) for creating, starting, and destroying a multimedia database; and
a9) a command device (71) to open a session and enabling a user to control the device (70) for creating, starting, and destroying a multimedia database;

b) a set of specialized functional units comprising at least:

b1) a unit (301) for optimizing various units of the system;
b2) a unit (302) for driving document indexing;
b3) a unit (303) for driving document searching; and
b4) an identifier manager (60) adapted to associate a unique reference to each element of a multimedia document; and

c) an interconnection and intercommunication device (10) for the specialized operational units and the specialized functional units; and wherein the multimedia database comprises both references to documents to be archived and composite signatures constituted by characterizing components of archived documents and by descriptions of the structure of the archived documents identifiying the relationships between the homogeneous components of archived documents.

4. A system according to claim 3, **characterized in that** said indexing agent (121) that can be subdivided into at least two subagents is an agent serving to index objects of image type, and **in that** said search agent (122) that can be subdivided into at least two subagents is an agent serving to search for objects of image type.

5. A system according to claim 3 or claim 4, **characterized in that** said device (200) for analyzing the content of an input multimedia document and for extracting the structure of document components comprises a first unit for processing and analyzing an image or a signal, for statistical analysis, for modelling, and for classification to group together the elements of an input document into homogeneous components, and a unit for producing the structure of the document or a graph of objects establishing the relationships between the various components of the document.

6. A system according to any one of claims 3 to 5, **characterized in that** it includes an indexing unit for indexing objects of text type and a search agent for searching for objects of text type.

7. A system according to any one of claims 3 to 6, **characterized in that** it includes an indexing unit for indexing objects of sound type and a search agent for searching for objects of sound type.

8. A system according to any one of claims 3 to 7, **characterized in that** it includes an analysis unit for extracting image objects, sound objects, and objects characterizing the dynamic behavior thereof, an indexing unit for indexing video type objects, and a search unit for searching for video type objects.

9. A system according to any one of claims 3 to 8, **characterized in that** it comprises a plurality of devices (200) for analyzing the content of an input multimedia document and for extracting and structuring components of the document, each of these devices for analyzing contents, extraction, and structuring being adapted to a specific type of document identified by the nature of its content (image, text, sound, video).

**102**

**101**

**121**

agent
d'indexation
spécialisé
double

**~100**

Base de
données

agent
de recherche
spécialisé
double

**122**

ajout de gestion
des informations
de structure

**123**

**80**

**30** Interface
d'indexation

**40**

Interface
de recherche

**90**

Annuaire de
référence d'unités
spécialisées

**10** Gestion
de la vitesse
de traitement
et des ressources

**20**

Acquisition

**60**

Gestionnaire
des
identifiants

**300**

Agent
d'agencement

**301**

Agent de pilotage
d'indexation

**302**

Agent de pilotage
de recherche

**303**

Commande
d'ouverture
de session

**71**

**201**

Module d'analyse
de document

**202**

Module d'extraction
des composants
du document

**200**

Module de structuration des composants
du document

**203**

Création, démarrage
et destruction d'une
base de données

**70**

# FIG.1

Entrée document Di à indexer ~401

Attribution d'un identifiant unique Id$_d$ au document Di ~402

Lecture du document Di avec un module d'acquisition ~403

Analyse du document Di : Extraction de composants homogènes (vidéo, image, texte, son,...) et structuration ~404

Attribution d'un identifiant unique Id$_c$ à chaque composant homogène ~405

Attribution d'un agent d'indexation à chaque type de composant homogène pour caractériser le contenu de chaque composant homogène ~406

Extraction et structuration d'objets homogènes pour chaque composant homogène ~407

Etablissement d'éventuelles relations entre des éléments appartenant à différents composants homogènes ~408

Extraction de signatures composites ~409

Stockage du document multimédia Di avec son identifiant et sa signature composite ~410

FIG.2

**FIG.13**

Document multimédia à indexer

Extraction de composants homogènes

Vidéo | Texte | Image | Son | ... | Structure

Extraction et structuration d'objets homogènes

(Trame clés d'une vidéo, zones textes à l'intérieur d'une trame/image, personnages, forme,...)

Extraction de signatures composites

Signature composite

**FIG.3**

426 — Etablissement d'un ordre de pertinence des résultats

427 — Présentation des résultats

421 — Entrée d'une requête composite Qc

421a — Attribution d'un identifiant unique à la requête composite

422 — Analyse de la requête composite Qc avec extraction de requêtes homogènes et de relations de contraintes utilisateur

423 — Attribution d'un identifiant unique à chaque requête homogène

424 — Traitement des requêtes homogènes

425 — Synthèse des résultats avec prise en compte des contraintes utilisateur

FIG.4

FIG.5

**303**

**621**　**622**

Traitement des
questions élémentaires
**631**

TEMAS

IMAS

**632**　**100**

**303**

**623**　**624**

**641**　**642**

# FIG.6

**501**

Archivage

Introduction du document dans la base

**502**

Identification des composants

Elaboration de la signature composite

**503**

Base de
données

**101**

**521**

Recherche

Soumission de la question composite

**522**

Décomposition de la question

Elaboration de la signature composite

**523**

Comparaison　~ **524**

Réponses par ordre de pertinence

**525**

# FIG.7

$$\Sigma_{0,T} H(i)$$

T

H(i)

Cumul sur taille T    Max (1)

**FIG.8**

Max: 97704 (86%)   Min: 0  Avg: 154

**FIG.11**

Pour tout renseignement
concernant
l'Ef Authentique Aventure

**FIG.9**

Pour tout renseignement
concernant
l'Ef Authentique Aventure

**FIG.10**

Max: 2840 (1%)   Min: 0  Avg: 119

**FIG.12**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5706365 A
- US 5794177 A

- WO 9959083 A

**Littérature non-brevet citée dans la description**

- Multimedia distributed coopérative system. **A. KAR-MOUCH.** Computer Communications. Elsevier Science Publishers BV, Janvier 1993, vol. 16